# EUROPEAN PATENT SPECIFICATION

(11) **EP 2 937 263 B1**
(45) Date of publication and mention of the grant of the patent: **18.10.2017**
(21) Application number: 15160235.6
(22) Date of filing: 23.03.2015
(51) Int. Cl.: B62D 1/04, B62D 1/06

(54) **STEERING WHEEL USER INTERFACE**
LENKRAD MIT BENUTZERSCHNITTSTELLE
INTERFACE UTILISATEUR DE VOLANT DE DIRECTION

(30) Priority: 31.03.2014 US 201461972435 P; 30.04.2014 US 201461986341 P; 30.05.2014 WO PCT/US2014/040112; 03.06.2014 WO PCT/US2014/040579; 23.06.2014 US 201414311366; 24.06.2014 US 201414312711; 24.06.2014 US 201414312787; 24.11.2014 US 201414551096; 28.11.2014 US 201414555731; 06.01.2015 US 201514590010
(43) Date of publication of application: 28.10.2015
(73) Proprietor: Neonode Inc., San Jose CA 95134 (US)
(72) Inventor: Jubner, Alexander, 113 28 Stockholm (SE); Eriksson, Thomas, 114 32 Stockholm (SE); Fröjdh, Gunnar, Martin, 137 71 Dalarö (SE); Fellin, Simon, 193 31 Sigtuna (SE); Holmgren, Stefan, 192 72 Sollentuna (SE)
(74) Representative: Lavoix

(56) References cited:
- GB-A- 1 107 666
- JP-A- 2011 254 957
- US-A1- 2012 326 735
- US-A1- 2014 081 521

## Description

### FIELD OF THE INVENTION

The field of the present invention is steering wheel user interfaces for vehicles.

### BACKGROUND OF THE INVENTION

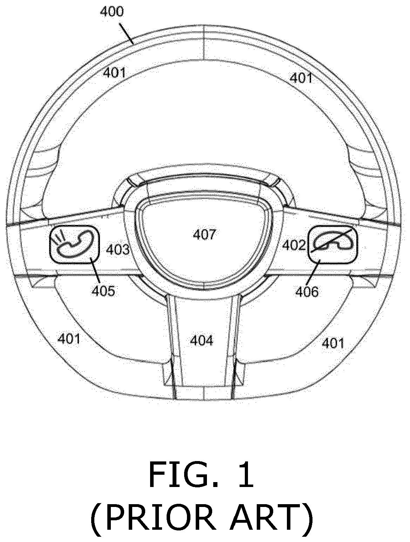

Reference is made to **FIG. 1****,** which is a simplified illustration of a prior art steering wheel. A steering wheel **400,** shown in **FIG. 1****,** includes a circular gripping member **401,** one or more connecting members **402 - 404** that connect the gripping member **401** to steering column **407,** and buttons **405** and **406** on connecting members **402** and **403** for controlling various devices in the vehicle. Connecting members **402 - 404,** which connect gripping member **401** to steering column **407,** are also referred to as spokes. In **FIG. 1****,** button **405** is used to answer an incoming phone call on the vehicle's BLUETOOTH^{®} speaker phone and button **406** hangs up the call. BLUETOOTH is a trademark owned by Bluetooth SIG, Inc of Kirkland, WA, USA. Controls mounted in a steering wheel can be operated comfortably and safely since the driver is able to control and operate these controls without taking hands off the wheel or eyes off the road.

Historically, the first button added to a steering wheel was a switch to activate the car's electric horn. When cruise control systems were introduced, some automakers located the operating switches for this feature on the steering wheel as well. Today additional button controls for an audio system, a telephone and voice control system, a navigation system, a stereo system, and on board computer functions are commonly placed on the steering wheel.

U.S. Patent Publication No. 2012/0232751 A1 for PRESSURE-SENSITIVE STEERING WHEEL CONTROLS describes adding pressure-sensitive controls to the circular gripping member of the steering wheel. Pressure sensors are located at various locations along the perimeter of the gripping member, and different locations correspond to different controls. A control is actuated in response to application of pressure at a sensor location, e.g., by the user tightening his grip.

Prior art user interfaces associated with steering wheels, such as the buttons and grips discussed hereinabove, associate a function with an absolute position on the steering wheel. This is conceptually analogous to a touch-sensitive screen displaying icons where the user touches the location on the screen at which the icon is located to activate the icon. The concept of absolute positioning for user input goes back even further: each key on a keyboard is positioned at an absolute position within the keyboard. Similarly, early graphical user interfaces using light pens required the user to place the light pen onto a graphic displayed on the screen in order to activate a corresponding function.

In contrast to these user interfaces based on absolute positioning, the computer mouse introduced a user interface for controlling a cursor based on relative positioning. Namely, the mouse cursor moves on the screen in a direction that the mouse moves from point A to point B, but this movement is not at all contingent on the actual coordinates -- the absolute positions -- of points A and B. This shift from absolute positioning to relative positioning frees the user from having to look at, or be aware of, the location of the mouse on the table. The user only has to control the direction in which the mouse moves on the table, which he can do without looking at the mouse. One of the objectives of the present invention is to provide a user interface for a driver based on the relative positioning user interface model.

U.S. Publication No. 2014/081521 A1 to Fröjdh et al., is considered as the closest prior art and discusses a system for use in a vehicle, including a steering element situated opposite a driver seat in a vehicle, the steering element including a plurality of proximity sensors encased in the periphery of the steering element operable to detect hand gestures along the outer periphery of the steering element, an interactive deck housed in the vehicle, for providing at least one of radio broadcast, video broadcast, audio entertainment, video entertainment and navigational assistance in the vehicle, and a processor housed in the vehicle, coupled with the proximity sensors and the deck, operable to identify the hand gestures detected by the proximity sensors, and to control the deck in response to thus-identified hand gestures.

### SUMMARY

The present disclosure relates to user interfaces for on board vehicle systems, and teaches a user interface that does not require the user to be aware of the location at which he is touching the steering wheel in order to activate a function. The present disclosure teaches a robust vocabulary of user gestures that can be mapped to a wide variety of applications. The user gestures of the present disclosure are performed with absolute confidence by a user, without the user looking at the surface on which the gestures are performed. In certain embodiments of the invention the gestures are performed on the rim of a steering wheel. The nature of these gestures and the underlying hardware provided for detecting these gestures enables each user interface gesture to be performed by the user without any need for looking at the steering wheel. Furthermore these gestures are entirely independent of how the steering wheel is rotated at the time the gestures are performed.

There is thus provided in accordance with an embodiment of the present invention a steering wheel that identifies gestures performed on its surface, including a circular gripping element including a thumb-receiving notch disposed along its circumference, an array of light-based proximity sensors, mounted in the gripping element, that projects light beams through the notch radially outward from the gripping element, and detects light beams reflected back into the gripping element by a moving object at or near the notch, and a processor, coupled with the proximity sensor array, for determining polar angles along the circumference of the gripping element occupied by the object, responsive to light beams projected by the proximity sensor array and reflected back by the object being detected by the proximity sensor array.

### BRIEF DESCRIPTION OF THE DRAWINGS

The present invention will be more fully understood and appreciated from the following detailed description, taken in conjunction with the drawings in which:
**FIG. 1** is a simplified illustration of prior art steering wheel;
**FIG. 2** is an exploded view of a steering wheel, in accordance with a first embodiment of the present invention;
**FIG. 3** is a cutaway view of a segment of the steering wheel of **FIG. 2****,** in accordance with an embodiment of the present invention;
**FIGS. 4** and **5** are exploded views of the steering wheel segment illustrated in FIG. 3, in accordance with an embodiment of the present invention;
**FIG. 6** is a simplified illustration of electronic components in the steering wheel segment of **FIG. 2** connected to a processor, in accordance with an embodiment of the present invention;
**FIG. 7** is a simplified illustration of a structure of light baffles placed upon the electronic components in **FIG. 6****,** in accordance with an embodiment of the present invention;
**FIGS. 8** and **9** are simplified illustrations of light beams detecting an object, in accordance with an embodiment of the present invention;
**FIG. 10** is simplified side view illustration of light beams projected radially outward from a steering wheel, in accordance with an embodiment of the present invention;
**FIG. 11** is a simplified illustration of communication between touch detection firmware and multiple clients over a network, in accordance with an embodiment of the present invention;
**FIG. 12** is a simplified illustration of five basic gesture components used in a steering wheel user interface, in accordance with an embodiment of the present invention;
**FIG. 13** is a flowchart of an exemplary vehicle user interface, in accordance with an embodiment of the present invention;
**FIG. 14** is a simplified illustration of user interface gestures performed on a steering wheel for an exemplary adaptive cruise control function, in accordance with an embodiment of the present invention;
**FIG. 15** is a simplified illustration of a multi-touch double-tap gesture and an exemplary user interface to activate an autonomous drive mode, in accordance with an embodiment of the present invention;
**FIG. 16** is a simplified illustration of a gesture and an exemplary user interface for exiting the autonomous drive mode, in accordance with an embodiment of the present invention;
**FIG. 17** is a simplified illustration showing how an incoming call is received, in accordance with an embodiment of the present invention;
**FIG. 18** is a simplified illustration showing how to hang up a call, in accordance with an embodiment of the present invention; and
**FIG. 19** is a simplified illustration of a user interface for a park assist function, in accordance with an embodiment of the present invention.

In the disclosure and figures, the following numbering scheme is used. Light transmitters are numbered in the **100**'s**,** light detectors are numbered in the **200**'s**,** light guides and lenses are numbered in the **300**'s, miscellaneous items are numbered in the 400's, light beams are numbered in the **600**'s, and flow chart elements are numbered 1000 - 1100. Like numbered elements are similar but not necessarily identical.

The following tables catalog the numbered elements and list the figures in which each numbered element appears.

| **Light Transmitters** | | | |
|---|---|---|---|
| | | | |
| **Element** | **Figures** | **Element** | **Figures** |
| **100** | **4, 5** | **106** | **6, 7** |
| **101** | **6** | **107** | **6, 7** |
| **102** | **6** | **108** | **6, 7** |
| **105** | **8 - 10** | **109** | **6, 7** |

| **Light Detectors** | | | |
|---|---|---|---|
| | | | |
| **Element** | **Figures** | **Element** | **Figures** |
| **200** | **4** | **203** | **8, 9** |
| **201** | **6, 8, 9** | **205** | **8, 9** |
| **202** | **6, 8, 9** | **206** | **8** |

| **Light Guides and Lenses** | | | |
|---|---|---|---|
| | | | |
| **Element** | **Figures** | **Element** | **Figures** |
| **300** | **2 - 7** | **303** | **8, 9** |
| **301** | **8, 9** | **304** | **8, 9** |
| **302** | **8, 9** | **305** | **8 - 10** |

| **Miscellaneous Items** | | |
|---|---|---|
| | | |
| **Element** | **Figures** | **Description** |
| **400** | **1** | steering wheel |
| **401** | **1** | grip |
| **402** | **1** | right spoke |
| **403** | **1** | left spoke |
| **404** | **1** | bottom spoke |
| **405** | **1** | answer button |
| **406** | **1** | reject button |
| **410** | **12, 14 - 19** | steering wheel |
| **411** | **2 - 5** | steering wheel frame |
| **412** | **2 - 5** | top cover |
| 413 | **2 - 5** | thumb notch |
| **414** | **2 - 7** | PCB |
| **415** | **2 - 5, 7** | light baffle |
| **416** | **3** | transparent cover section |
| **417** | **3, 5** | transparent cover section |
| **418** | **12, 14, 15, 17, 18** | finger |
| **419** | **12, 14, 16 - 19** | hand |
| **420** | **12, 15** | steering wheel surface |
| **421 - 424, 428, 431 - 434** | **12, 15** | hand/finger movement directions |
| **425** | **12** | clock icon |
| **426** | **15** | finger |
| **430** | **14** | double-tap gesture |
| **436** | **14 - 16** | Illumination |
| **437** | **14** | movement of illumination |
| **438** | **14, 17** | tap gesture |
| **440** | **6, 11** | Processor |
| **441 - 443** | **11** | network client |
| **444** | **11** | message bus |

| **Light Beams** | | |
|---|---|---|
| | | |
| **Element** | **Figures** | **Description** |
| **601** | **10** | light beam |
| **602** | **3, 8 - 10** | light beam |
| **603** | **8,9** | light beam |
| **604** | **8,9** | light beam |

| **Flow Chart Stages** | | |
|---|---|---|
| | | |
| **Element** | **Figures** | **Description** |
| **1001 - 1005** | **13** | vehicle application state |
| **1010 - 1019** | **13** | vehicle application action |

### DETAILED DESCRIPTION

Aspects of the present disclosure relate to light-based touch controls that allow a driver to keep his hands on a steering element while operating peripheral electronic devices and automated features in a vehicle.

According to a first embodiment of the invention, a steering wheel is provided with a touch sensitive strip disposed along the entire circumference of the steering wheel. In order to facilitate locating the strip, it is disposed in a thumb receiving notch or groove that is etched or otherwise formed along the circumference of the steering wheel. In addition to a touch sensor, there is also a visible-light illuminator behind or around the touch sensitive strip that is used to indicate the state of the user interface to the user, and also indicate where certain tap gestures should be performed.

A user interface for this steering wheel is designed to be independent of the rotation of the steering wheel. Sweep gestures are clockwise and counter-clockwise so that they are independent of rotation of the wheel. A function is activated in response to a gesture, such as a double-tap, performed anywhere along the circumference of the wheel. The activation of some functions places the user interface into a state in which one or more additional functions can be selectively activated. In order to activate these additional functions, the touch location at which the initial gesture was performed is illuminated and subsequent gestures are performed in relation to the illuminated portion of the wheel. When a portion of the wheel is thus illuminated, and the driver slides his hand along the steering wheel grip, the illuminated portion of the steering wheel follows the hand so that the hand is always next to the location for performing subsequent gestures. Similarly, when the user switches hands gripping the steering wheel, the illumination jumps to the newly gripped part of the wheel.

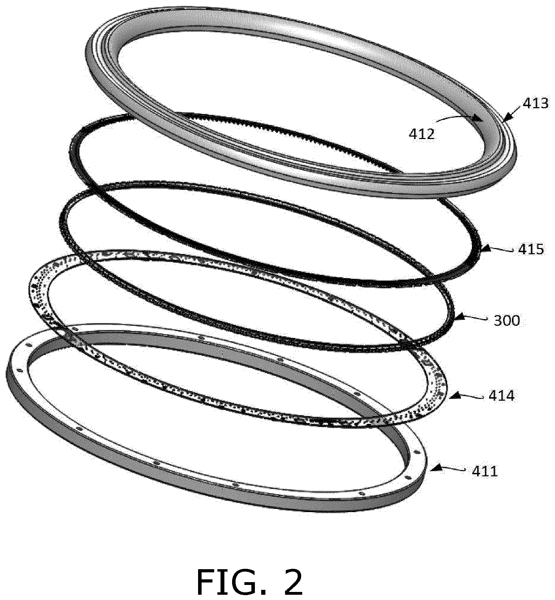

Reference is made to **FIG. 2**, which is an exploded view of a steering wheel, in accordance with a first embodiment of the present invention. Elements of this steering wheel include steering wheel frame **411**, PCB **414**, an array of lenses **300**, a light baffle structure **415,** and a steering wheel top cover **412.** A thumb-receiving notch **413** is disposed within steering wheel cover **412.**

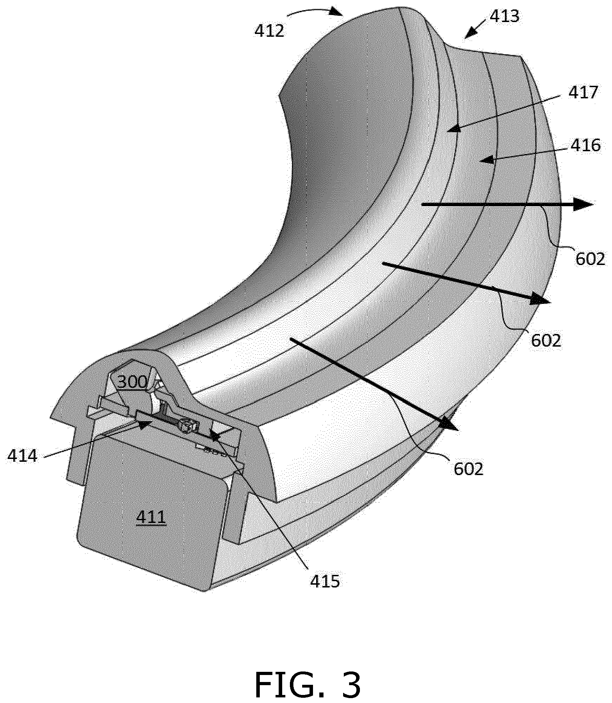

Reference is made to FIG. 3, which is a cutaway view of a segment of the steering wheel of **FIG. 2****,** in accordance with an embodiment of the present invention. Thumb-receiving notch **413** is illustrated in **FIG. 3****.** Two light transmissive portions of cover **412** are also shown in **FIG. 3****.** A first light transmissive portion **417** forms the side wall of thumb-receiving notch **413.** Light beams traveling into and out of this portion provide touch detection and proximity detection, as explained below. Three touch detection light beams **602** are shown directed radially outward from the steering wheel gripping element. The second light transmissive portion **416** forms a floor of thumb-receiving notch **413**, and is used for visible illumination indicating a state of the user interface to the driver, and at which location the driver should perform additional user interface gestures.

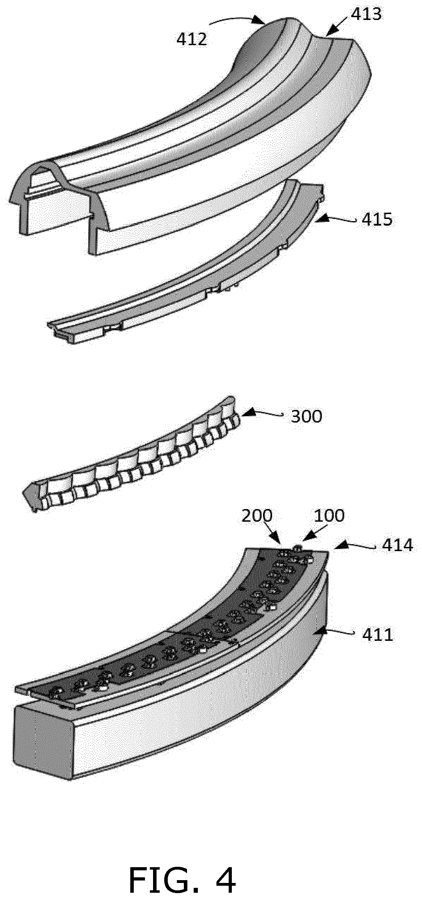

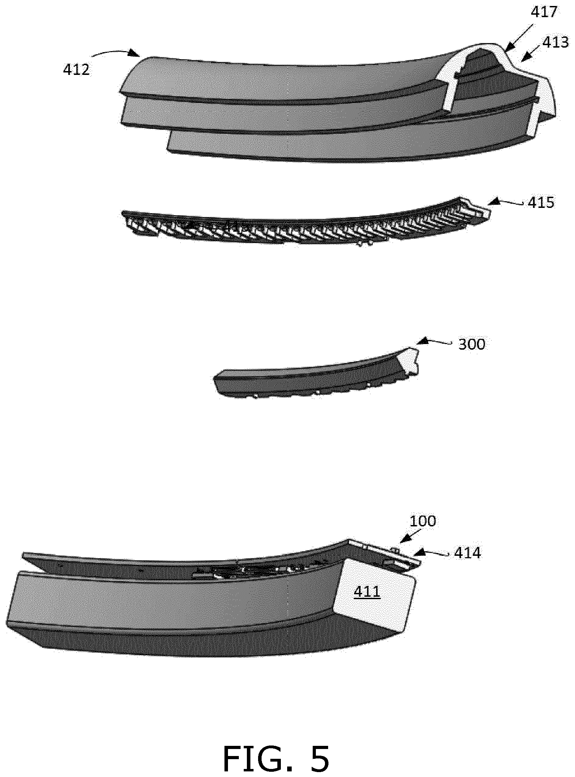

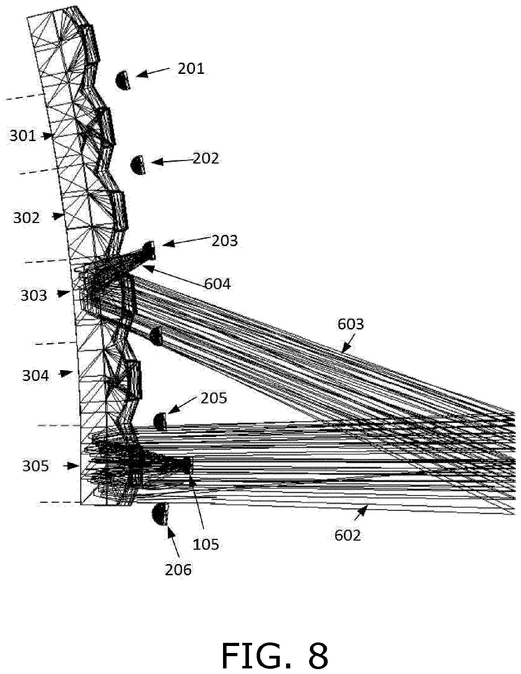

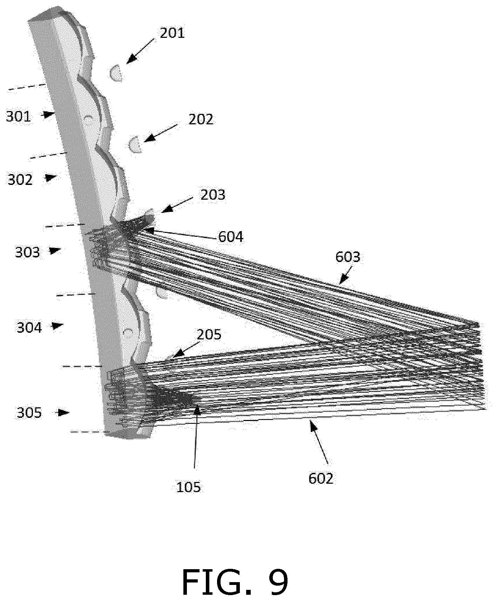

Reference is made to **FIGS. 4** and **5****,** which are exploded views of the steering wheel segment illustrated in **FIG. 3****,** in accordance with an embodiment of the present invention. As shown in **FIG. 4****,** two concentric rows of elements are mounted on PCB **414.** Namely, an inner row of light detectors **200** and an outer row of light emitters **100.** Light from the emitters enters lenses **300** through which it is re-directed out of the steering wheel through light transmissive portion **417** as light beams **602,** illustrated in **FIGS. 3** and **8 - 10.** An object such as a thumb placed in notch 413 reflects the light back through portion **417** and lenses **300** onto one or more of the light detectors **200,** thereby providing touch detection, as illustrated in **FIGS. 8** and **9****.** Similarly, an object such as a user's hand placed along the outer rim of the steering wheel outside notch **413** and opposite light transmissive portion **417** also reflects the light back through portion **417** and lenses **300** onto one or more of the light detectors **200,** thereby providing proximity detection.

**FIG. 5** shows an exploded view from below of the steering wheel segment illustrated in **FIG. 3****,** in accordance with an embodiment of the present invention.

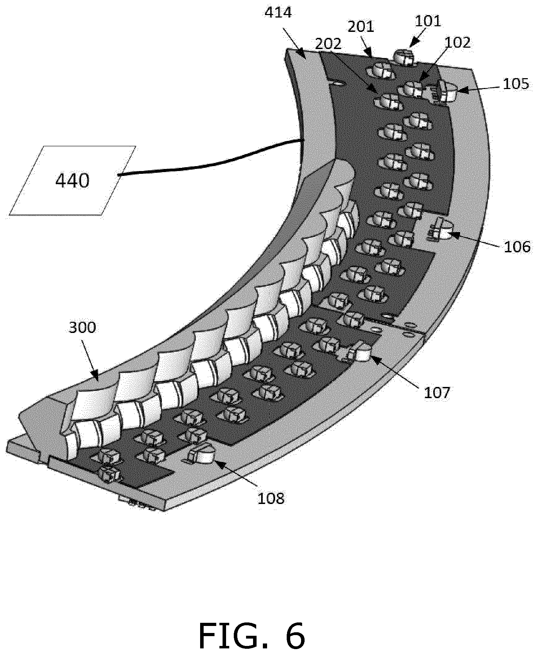

Reference is made to **FIG. 6****,** which is a simplified illustration of electronic components in the steering wheel segment of **FIG. 2** connected to a processor, in accordance with an embodiment of the present invention. **FIG. 6** shows processor **440** connected to PCB **414** on which three concentric arrangements of light elements are mounted, namely, an inner circular arrangement of inward facing light detectors, including detectors **201** and **202;** a middle circular arrangement of inward facing light emitters, including emitters **101** and **102;** and an outer circular arrangement of outward facing light emitters **105 - 108.** The inward facing light emitters are used for touch and proximity detection and typically emit light in the near infrared range. Processor **440** controls activation of the emitters and detectors, and detects gestures performed on the steering wheel based on these activations and based on the outputs of the detectors.

The outward facing light emitters are used to provide visual indications to the user by illuminating light transmissive portion **416** of the steering wheel cover, and emit light in the visible range. Lenses **300** are described in assignee's co-pending application US Serial No. 14/555,731, entitled DOOR HANDLE WITH OPTICAL PROXIMITY SENSORS.

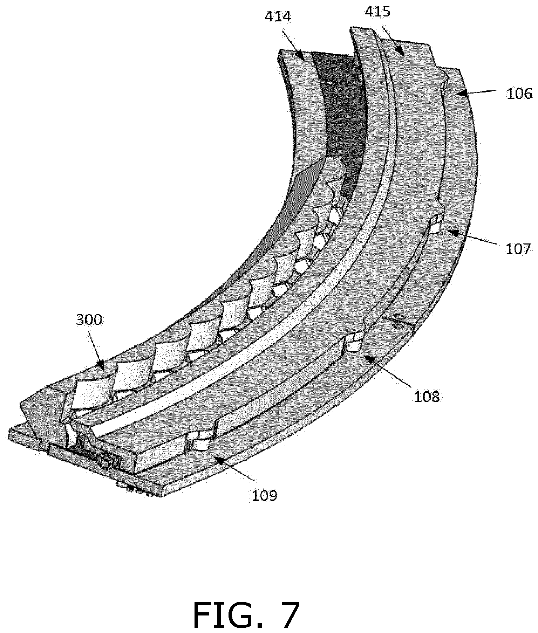

Reference is made to **FIG. 7****,** which is a simplified illustration of a structure of light baffles placed upon the electronic components in **FIG. 6****,** in accordance with an embodiment of the present invention. **FIG. 7** shows PCB **414** and lenses **300** of **FIG. 6****,** but with baffle structure **415** placed above the mounted light elements.

Reference is made to **FIGS. 8** and **9****,** which are simplified illustrations of light beams detecting an object, in accordance with an embodiment of the present invention. **FIGS. 8** and **9** show a light path used to detect an object. Shown in **FIGS. 8** and **9** are individual lens structures **301** - **305.** Each lens structure serves a respective opposite emitter and two detectors, one to the left of the emitter and one to the right of the emitter. Thus, for example, lens structure **305** serves emitter **105** and detectors **205** and **206.** In addition each detector is served by two lens structures; e.g., detector **205** receives reflected light from lens structures **304** and **305.** In the example shown in **FIGS. 8** and **9****,** light from emitter **105** is reflected by an object (not shown) into lens structure 303 and onto detector **203.** Three segments of the detected light are indicated in **FIGS. 8** and **9****;** namely, light beam **602** projected outward from lens structure **305** and radially outward of the steering wheel, light beam **603** reflected by the object into lens structure **303,** and light beam **604** directed by lens structure **303** onto detector **203.**

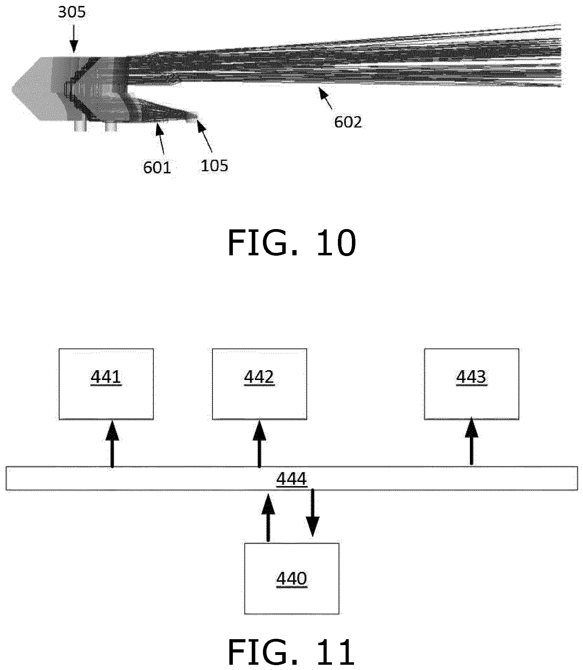

Reference is made to **FIG. 10****,** which is a simplified side view illustration of light beams projected radially outward from a steering wheel, in accordance with an embodiment of the present invention. **FIG. 10** shows a cutaway side view of the light path illustrated in **FIGS. 8** and **9****.** **FIG. 10** shows light beam **601** from emitter **105** entering lens structure **305,** where it is redirected outward as light beam **602.**

Methods for determining two-dimensional coordinates of an object detected by the disclosed proximity sensor array are described in assignee's co-pending applications US Serial No. 14/312,787, entitled OPTICAL PROXIMITY SENSORS, and US Serial No. 14/555,731, entitled DOOR HANDLE WITH OPTICAL PROXIMITY SENSORS. Because the present application is for a steering wheel and the proximity sensor array is arranged along an arc-shaped grip of the steering wheel, the determined coordinates are polar coordinates, including a polar angle and a radial coordinate. The polar angle corresponds to a coordinate along the proximity sensor array, which in applications 14/312,787 and 14/555,731 is described as an x-axis coordinate. The radial coordinate corresponds to a distance from the proximity sensor array, which in applications 14/312,787 and 14/555,731 is described as a y-axis coordinate.

Discussion now turns to the firmware and software used to detect and interpret user gestures. There are five basic gesture components that are detected by the hardware and low level drivers: (i) Thumb-Tap, (ii) Thumb-Glide, (iii) Thumb-Long-Press, (iv) Grab and (v) Rim-Tap. These components are emitted on the network as they are detected, and are used by higher level software to assemble more complex gestures such as double-taps. Application software interprets these gestures as input commands. In some embodiments of the invention multiple client applications are connected via a network to the detector firmware. The firmware sends information for each detected gesture component over the network, and a client application translates that information into commands and/or constructs compound gestures from multiple gesture components.

Reference is made to **FIG. 11****,** which is a simplified illustration of communication between touch detection firmware and multiple clients over a network, in accordance with an embodiment of the present invention. **FIG. 11** shows an exemplary network architecture in which processor **440** sends detected gesture components over message bus **444,** e.g., using the Message Queue Telemetry Transport (MQTT) messaging protocol on top of the TCP/IP protocol, to connected clients **441 - 443.**

The five basic gesture components are categorized according to whether they are performed by a large object (hand) or small object (thumb), and whether the nature of the gesture component is discrete or continuous, as presented in the table below.

| **Component** | **Description** | **Object** | **Type** |
|---|---|---|---|
| Thumb-Tap | Tap thumb on steering wheel rim | Small | Discrete |
| Thumb-Glide | Glide thumb along steering wheel rim | Small | Continuous |
| Thumb-Long-Press | Hold thumb on steering wheel rim | Small | Continuous |
| Grab | Grab hold of steering wheel rim | Large | Continuous |
| Rim-Tap | Tap hand on steering wheel rim | Large | Discrete |

These gesture components are alternatively referred to as follows.

| **Component** | **Alternative Name** |
|---|---|
| Thumb-Tap | small-object tap |
| Thumb-Glide | small-object glide |
| Thumb-Long-Press | small-object touch-and-hold |
| Grab | large-object grab |
| Rim-Tap | large-object tap |

The parameters are the same for all gesture components; namely, time stamp, start angle (min_angle), end angle (max_angle), center angle (angle) and state.

The angle parameters refer to a polar angle along the steering wheel at which the object is detected. Because of the object's size, there is a first polar angle at which the object begins (start angle) and a last polar angle at which the object ends (end angle). The midpoint between the start and end angles (center angle) is used as the object's polar angle. The start and end angles are useful for determining the size of a detected object.

The state parameter takes on three values: *RECOGNIZED, UPDATED* and *ENDED.* The *ENDED* state is applied to all discrete gesture components, and also when a continuous gesture component ends. The *RECOGNIZED* and *UPDATED* states are only applied to continuous gesture components. The *RECOGNIZED* state is applied when a continuous gesture component is first detected. The *UPDATED* state is applied during the course of a continuous gesture component.

The discrete gesture components, Thumb-Tap and Rim-Tap, are emitted to the clients after they happen, and then only one message is sent for the gesture component. They are only sent with the state *ENDED.*

The continuous gesture components, Thumb-Glide, Thumb-Long-Press and Grab, are emitted to the clients intermittently from the instant that they are recognized until they end when the hand or finger leaves the rim. When they are first recognized, they are sent to the network with the state *RECOGNIZED.* With a configurable interval, the gesture component is reported to the network with new parameters and the state *UPDATED.* When the gesture component ends, the gesture component is sent with the state *ENDED.*

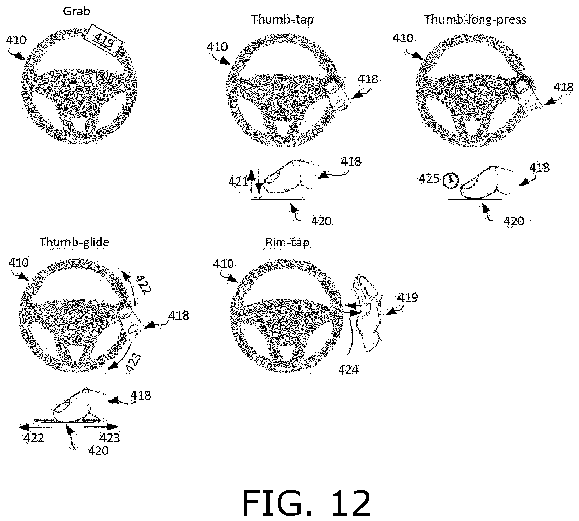

Reference is made to **FIG. 12****,** which is a simplified illustration of five basic gesture components used in a steering wheel user interface, in accordance with an embodiment of the present invention. **FIG. 12** shows the five gesture components performed by thumb **418** and hand **419** on steering wheel **410.** Some gesture components are illustrated both from above and from the side. When illustrated from the side, thumb **418** is shown interacting with steering wheel surface **420.**

A Thumb-Tap gesture component is generated when a small object touches the rim (or gets very close) and then is lifted from the rim within a short period. This period is configurable, but typically it is 100-200 ms. **FIG. 12** shows the Thumb-Tap gesture component from above and from the side, and illustrates the movement of thumb **418** by arrows **421.**

A Rim-Tap gesture component is the same as a Thumb-Tap, but for a large object such as a hand. **FIG. 12** shows the Rim-Tap gesture component from the side and illustrates the movement of hand **419** by arrows **424.**

A Thumb-Glide gesture component is generated when a small object touches the rim and moves at least a certain threshold distance along the rim. That distance is configurable. When it continues to move, *UPDATE* messages are sent when the object has moved a certain distance, also configurable. **FIG. 12** shows the Thumb-Glide gesture component from above and from the side, and illustrates the movement of thumb **418** by arrows **422** and **423.**

A Grab gesture component is the same as a Thumb-Glide gesture component, but for a large object touching the rim, and with the difference that the Grab gesture component does not have to move to be reported on the network. When the hand has been on the rim for a certain time threshold, the Grab gesture component is recognized and messages are intermittently sent to the network. **FIG. 12** shows the Grab gesture component from above by showing hand **419** gripping steering wheel **410.**

A Thumb-Long-Press gesture component is generated when a small object is present, and not moving, on the rim. When the small object has been present for a certain time, messages are sent intermittently to the network about the gesture component. If the object starts moving, the Thumb-Long-Press gesture component is ended and a Thumb-Glide gesture component is started instead. **FIG. 12** shows the Thumb-Long-Press gesture component from above and from the side. Clock icon **425** indicates the time threshold required to distinguish this gesture component from a Thumb-Tap.

As mentioned above, gesture components are combined into compound user interface gestures. In some cases, environment conditions at the gesture location are combined with the gesture component to define a gesture. For example, a Thumb-Tap gesture performed at one end of an illuminated portion of the rim is translated into a first command, and a Thumb-Tap gesture performed at the other end of the illuminated portion of the rim is translated into a second command. The following table lists the different gestures and compound gestures in the steering wheel user interface, the gesture components that make up each gesture, additional gesture parameters, and example context and commands for each gesture.

| **Gesture** | **Gesture Components** | **Additional Parameters** | **Example Context** | **Example Command** |
|---|---|---|---|---|
| Tap inside notch | Thumb-Tap | Thumb-tap performed at top or bottom of illuminated portion of illuminated segment of steering wheel | Cruise control is active | Increase or decrease cruise control speed in 5 mph increments |
| Tap on steering wheel outer rim | Rim-Tap | | During phone call | Reactivate phone interaction, e.g., when phone call is active for set period of time. |
| | | | | Enables hanging up the phone call with a clockwise swipe gesture |
| Single object double-tap inside notch | Two Thumb-Taps | Thumb-taps have different time stamps, similar center angles | Vehicle is in motion | Activate cruise control and illuminate location of double-tap |
| Single object double-tap on steering wheel outer rim | Two Rim-Taps | Side of steering wheel rim (left or right) at which double-tap is performed | Car is not moving, and Park Assist icon is displayed on HUD | Activate Park Assist to park on left or right side of car, based on tapped side of rim |
| Multi-touch double-tap inside notch | Two Thumb-Taps | Thumb-taps have similar time stamps, different center angles | Autonomous drive is not active | Activate autonomous drive |
| Extended touch inside notch | Thumb-Long-Press | Thumb-long-press performed at top or bottom of illuminated portion of illuminated segment of steering wheel | Cruise control is active | Increase or decrease cruise control speed in 1 mph increments |
| Grab | Grab | | Autonomous drive is active | Deactivate autonomous drive, and enter cruise control mode |
| Swipe | Thumb-Glide | clockwise/ counter-clockwise | Cruise control is active | Increase or decrease distance from forward car in cruise control mode |
| Radial swipe | Thumb-Glide | Thumb-glide data structures have similar center angles and different radial coordinates | Cruise control is active | Open cruise control menu on HUD |
| Slide | Grab | Grab data structures have different time stamps and different center angles | Portion of steering wheel is selectively illuminated | Move illumination to new hand location (follow slide movement) |
| Switch hands | Grab | Grab data structures have different time stamps and different center angles | Portion of steering wheel is selectively illuminated | Move illumination to new hand location (jump to other side of wheel) |

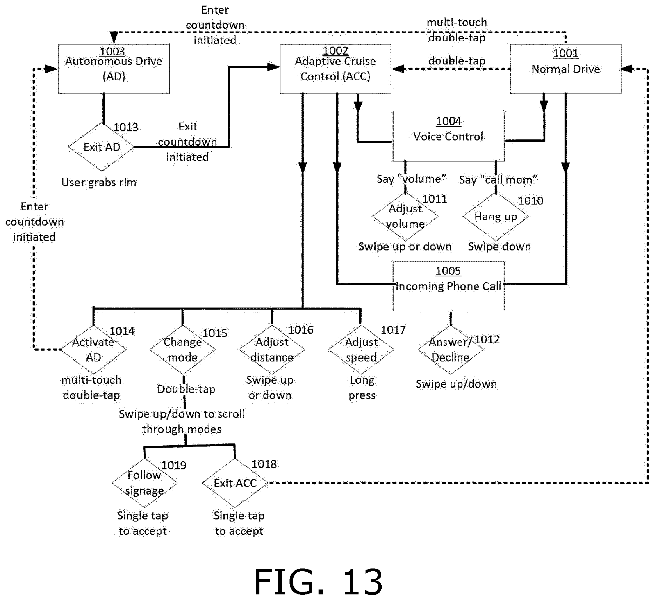

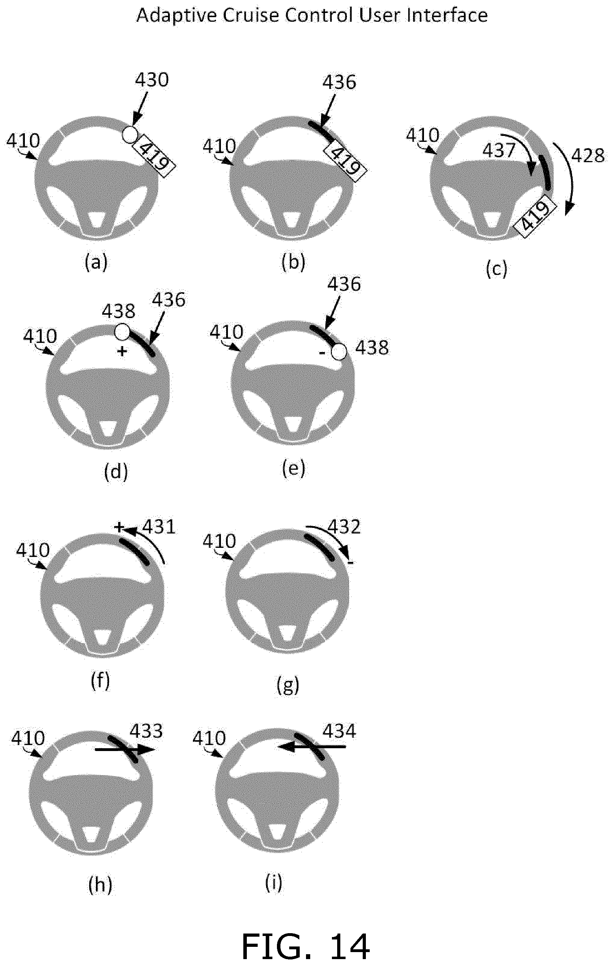

Reference is made to **FIG. 13****,** which is a flowchart of an exemplary vehicle user interface, in accordance with an embodiment of the present invention. The flowchart illustrates the different application states, different commands within each state, and the gestures used to issue those commands. The details of the gestures are illustrated in **FIGS. 14 - 19****.** In some embodiments a heads-up display (HUD) is provided.

The flowchart of **FIG. 13** illustrates a highway scenario that includes three driving modes: Normal Drive **1001,** Adaptive Cruise Control **1002** and Autonomous Drive **1003.** In Normal Drive mode, the driver steers the vehicle and controls its speed. In Adaptive Cruise Control mode the driver steers the vehicle but the vehicle's speed, its distance from the next vehicle on the road, and other parameters are controlled by the vehicle. In Autonomous Drive mode the vehicle is driven and steered automatically without driver input.

The user enters Adaptive Cruise Control mode from Normal Drive mode by performing a double-tap gesture. The user enters Autonomous Drive mode from Normal Drive mode and from Adaptive Cruise Control mode by performing a multi-touch double-tap gesture. These gestures are described below. In order to alert the driver that Autonomous Drive mode will begin shortly, the steering wheel is illuminated with an illumination pattern that indicates a countdown until Autonomous Drive is activated.

The user exits Adaptive Cruise Control mode by performing a double-tap gesture that opens a menu on the HUD for changing the mode **1015** of cruise control. The user performs clockwise or counter-clockwise swipe gestures to scroll through the different modes on the HUD, and performs a single-tap gesture to select the displayed mode. One of the modes is Exit ACC **1018,** and selecting this mode exits Adaptive cruise Control. Another mode configures the cruise control application to follow the road signage **1019.**

The user exits Autonomous Drive mode **1013** by grabbing the rim of the steering wheel. In order to alert the driver that Autonomous Drive mode is about to exit, the steering wheel is illuminated with an illumination pattern that indicates a countdown until Autonomous Drive is deactivated. Upon exiting Autonomous Drive mode, the vehicle enters Adaptive Cruise Control mode.

In Adaptive Cruise Control mode **1002** the user adjusts a distance **1016** between the vehicle and the vehicle directly in front of it, by performing a clockwise or counter-clockwise swipe gesture. The user adjusts the speed of the vehicle by performing either a tap gesture or an extended touch gesture. When the vehicle enters Adaptive Cruise Control mode **1002** a segment of the steering wheel is illuminated. A tap gesture or extended touch gesture at one end of the illuminated segment increases the vehicle speed, and a tap gesture or extended touch gesture at the other end of illuminated segment decreases the vehicle speed.

A voice control state **1004** can be entered from Normal Drive mode and Adaptive Cruise Control mode. In this state, the user can initiate a phone call by saying "*call*' and the name of a contact from his phone's contact list. Once the call has been connected, the user can hang up **1010** by performing a clockwise swipe gesture. The user can also adjust the volume **1011** by saying the word *"volume"* and then performing a counter-clockwise swipe gesture to raise the volume, or a clockwise swipe gesture to lower the volume.

When an incoming phone call **1005** is received, the user can answer the call **1012** by performing a counter-clockwise swipe gesture, or decline the call **1012** by performing a clockwise swipe gesture.

Reference is made to **FIG. 14****,** which is a simplified illustration of user interface gestures performed on a steering wheel for an exemplary adaptive cruise control function, in accordance with an embodiment of the present invention. In order to enter Adaptive Cruise Control mode from Normal Drive mode the user performs a single object double-tap gesture. Namely, the user taps twice with his thumb on the thumb notch in the steering wheel. This gesture is illustrated in drawing (a) in **FIG. 14****,** showing steering wheel **410,** hand **419** gripping steering wheel **410,** and double-tap gesture **430.** The present invention enables the user to perform the double-tap gesture **430** at any location along the perimeter of steering wheel **410.**

When Adaptive Cruise Control is active the user has four options; namely, adjust cruise control speed, adjust the distance between the vehicle and the vehicle ahead, open an adaptive cruise control menu, and activate Autonomous Drive mode. As mentioned above Adaptive Cruise Control is activated when the user taps twice with his thumb in the steering wheel thumb notch. The location of these taps is subsequently illuminated to indicate to the user where to perform future gestures. This is illustrated in drawing (b) in **FIG. 14****,** showing illuminated segment **436** of the steering wheel **410** at the location at which double-tap **430** was performed. Thus, to increase the cruise control speed the user performs a gesture, e.g. a single-tap, above the illuminated portion. This is illustrated in drawing (d) in **FIG. 14** showing tap gesture **438** at the counter-clockwise edge of illuminated portion **436.** The "+" indicates that this gesture increases the speed of the vehicle. Drawing (e) in **FIG. 14** shows gesture **438** performed at the clockwise end of illuminated portion **436,** and the "-" indicates that the gesture decreases the speed of the vehicle.

If the user slides his hand **419** along steering wheel **410,** the illuminated portion **436** moves with the hand so that the user's thumb is always next to the illuminated portion of the steering wheel. This is illustrated in drawing (c) in **FIG. 14****,** in which hand **419** gripping steering wheel **410** slides clockwise as indicated by arrow **428,** and illuminated portion **436** also slides in the same direction as indicated by arrow **437.**

In some embodiments the cruise control speed is also adjusted in response to extended touch gestures above and below the illuminated portion of the steering wheel. For example, the speed is adjusted by 5 km/h in response to a tap gesture, and is adjusted by 1 km/h in response to an extended touch gesture.

In order to increase or decrease the distance between the vehicle and the vehicle in front of it on the road, the user performs clockwise and counter-clockwise swipe gestures. These are illustrated in drawings (f) and (g) in **FIG. 14****.** Drawing (f) illustrates a counter-clockwise gesture **431** to increase the distance between vehicles, and drawing (g) illustrates a clockwise gesture **432** to decrease the distance between vehicles.

In order to change the mode of Adaptive Cruise Control the user performs a radial swipe gesture with his thumb across the width of the steering wheel thumb notch. This is illustrated in drawings (h) and (i) in **FIG. 14****.** Drawing (h) illustrates swipe gesture **433** that moves outward across the width of illuminated portion **436.** Drawing (i) illustrates swipe gesture **434** that moves inward across the width of illuminated portion **436.** Either gesture causes the HUD to present a mode option for selection. The user performs a single-tap gesture with his thumb in the steering wheel notch to accept the displayed mode. The mode displayed in the HUD is changed in response to a swipe gesture. For example, a first mode is to follow road signage. If the user performs a single-tap when this mode is displayed on the HUD, a Follow Road Signage mode is activated. If the user swipes clockwise or counter-clockwise, a next or previous mode is displayed such as exit Adaptive Cruise Control. The user performs a single-tap to activate this mode. If no interaction from the user is received within a fixed amount of time, such as 5 seconds, then the change mode user interface is deactivated.

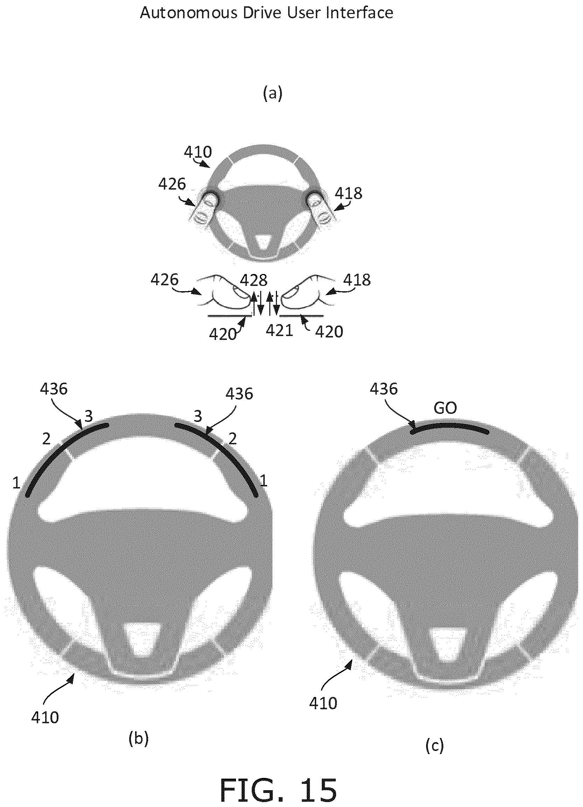

Reference is made to **FIG. 15****,** which is a simplified illustration of a multi-touch double-tap gesture and an exemplary user interface to activate an autonomous drive mode, in accordance with an embodiment of the present invention. Drawing (a) in **FIG. 15** illustrates two fingers, **418** and **426,** simultaneously tapping at two locations on steering wheel **410.** The upper part of this drawing is a view from above, and the lower part of this drawing is a view from the side of each of the fingers **418** and **426.** The tap gesture is a brief down and up gesture illustrated by arrows **421** and **428** touching surface **420** of the steering wheel.

Once the user performs this multi-touch double-tap gesture, a series of locations on the steering wheel is sequentially illuminated over time to indicate a countdown until Autonomous Drive is activated, as illustrated in drawings (b) and (c). For example, viewing the upright steering wheel as a clock, drawing (b) illustrates a sequence of illuminations that begins with (i) the 2:30 and 9:30 clock positions indicated by a 1; followed by (ii) the 1:30 and 10:30 clock positions indicated by 2; followed by (iii) the 12:30 and 11:30 clock positions indicated by 3. Drawing (c) illustrates finally illuminating the 12 o'clock position indicated by the word "Go" to inform the user that Autonomous Drive is activated and the user can safely take his hands off the wheel.

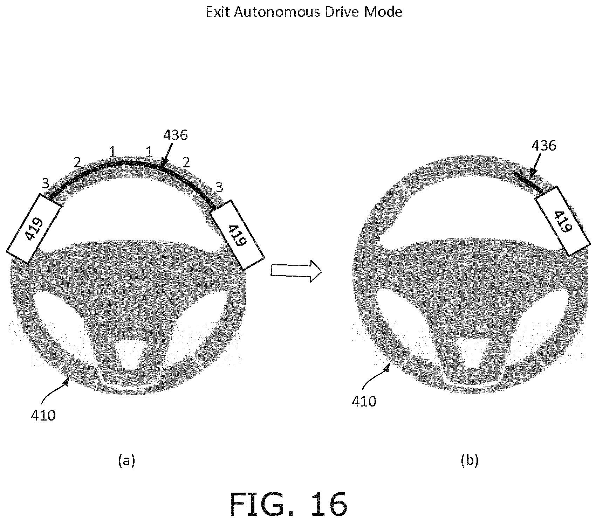

In order to exit Autonomous Drive mode and enter Adaptive Cruise Control mode, the user grabs the steering wheel. Reference is made to **FIG. 16****,** which is a simplified illustration of a gesture and an exemplary user interface for exiting autonomous drive mode, in accordance with an embodiment of the present invention. **FIG. 16** shows two hands **419** gripping steering wheel **410,** in accordance with an embodiment of the present invention. A series of locations on the steering wheel is then sequentially illuminated to indicate that Autonomous Drive mode is about to be the deactivated. For example, drawing (a) illustrates a sequence of illuminations that begins with (i) the 11:30 and 12:30 clock positions indicated by a 1; followed by (ii) the 10:30 and 1:30 clock positions indicated by 2; followed by (iii) the 9:30 and 2:30 clock positions indicated by 3. When Autonomous Drive mode is deactivated the vehicle enters Adaptive Cruise Control mode, and a portion **436** of steering wheel **410** next to one of the hands **419** gripping the steering wheel is illuminated, as illustrated in drawing (b) of **FIG. 16****,** and as discussed above with reference to **FIG. 14****.**

In both Normal Drive mode and Adaptive Cruise Control mode the user can enable voice activated controls by tapping twice on the outer rim of the steering wheel. When voice-activated controls are enabled the user disables these controls by repeating the same double-tap gesture.

Two voice-activated controls are illustrated in **FIG. 13****:** placing a phone call and enabling volume adjustments. To place a phone call the user says "*call*' and the name of the person to call, e.g., *"call Mom".* In order to hang up the call the user performs a swipe gesture along the thumb notch in the steering wheel. To adjust the volume of a call or the stereo system, the user says the word *"volume"* and then adjusts the volume up or down by swiping clockwise or counter- clockwise along the thumb notch in the steering wheel.

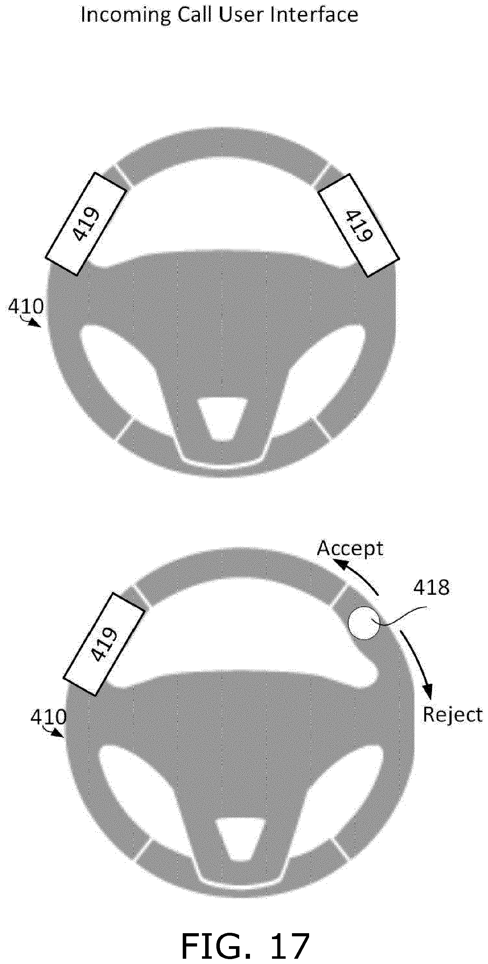

Reference is made to **FIG. 17****,** which is a simplified illustration showing how an incoming call is received, in accordance with an embodiment of the present invention. **FIG. 17** shows that when an incoming call is received, the user answers or declines the call by swiping finger **418** clockwise or counter-clockwise along the thumb notch of the steering wheel, e.g. swipe counter-clockwise to accept the call and swipe clockwise to reject the call.

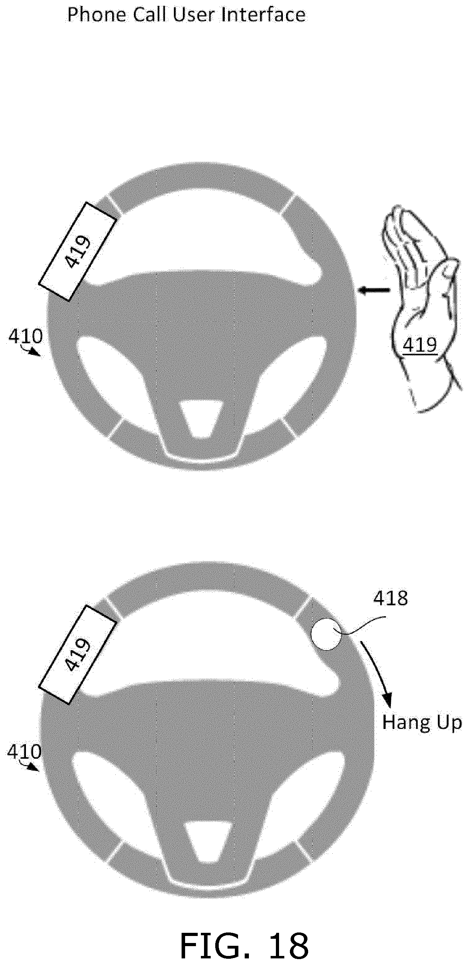

Reference is made to **FIG. 18****,** which is a simplified illustration showing how to hang up a call, in accordance with an embodiment of the present invention. The gesture to hang up a call is a clockwise swipe gesture. However, when a call has been active for a certain amount of time, the system ignores clockwise swipe gestures so that the user does not inadvertently hang up the call. In order to hang up the call, the user first taps the outer rim of the steering wheel, as shown by hand **419,** to indicate that the system should respond to the next swipe gesture, followed by a clockwise swipe gesture by finger **418** to hang up the call.

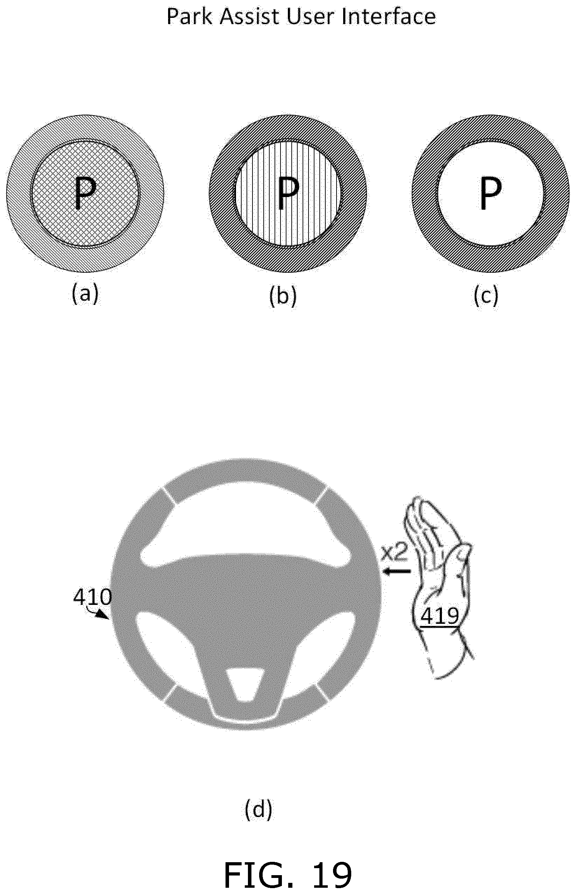

In a city scenario the user interface provides a park assist function that automatically parks the car without the user's intervention. Reference is made to **FIG. 19****,** which is a simplified illustration of a user interface for a park assist function, in accordance with an embodiment of the present invention. When the vehicle is moving at less than 30 km/h, the Park Assist function begins automatically scanning for available parking spaces. In addition, a faded Park Assist icon appears on the HUD, as illustrated in drawing (a) of FIG. 19. As the car further slows down, this icon becomes bolder until the car has stopped moving, as illustrated in drawings (b) and (c) of **FIG. 19****.** The HUD then presents information about available parking spots; e.g. whether the vehicle can fit into that spot. The user performs a double-tap on the outer rim of the steering wheel, as illustrated in drawing (d), by hand **419** to begin the automated parking. To indicate to the Park Assist function that the parking space is on the left side of the car, the user performs this double-tap on the left half of steering wheel rim. To indicate to the Park Assist function that the parking space is on the right side of the car, the user performs this double-tap on the right half of steering wheel rim.

According to an embodiment, the present invention relates to a steering wheel that identifies gestures performed on its surface, comprising: a circular gripping element comprising a thumb-receiving notch disposed along its circumference; an array of light-based proximity sensors, mounted in said gripping element, that projects light beams through said notch radially outward from said gripping element, and detects light beams reflected back into said gripping element by a moving object at or near said notch; and a processor, coupled with said proximity sensor array, for determining polar angles along the circumference of said gripping element occupied by the object, responsive to light beams projected by said proximity sensor array and reflected back by the object being detected by said proximity sensor array.

For example, in an embodiment, said processor generates one or more data structures for the moving object, each data structure comprising: a time stamp, a polar angle at which the moving object starts, a polar angle at which the moving object ends, a middle polar angle of the moving object, and an assigned state being one of the group RECOGNIZED, UPDATED and ENDED, wherein said processor assigns the RECOGNIZED state to the data structure when the moving object is initially detected by said proximity sensor array, wherein said processor assigns the UPDATED state to the data structure when the moving object is further detected by said proximity sensor array after the initial detection, and wherein said processor assigns the ENDED state to the data structure when the moving object ceases to be detected by said proximity sensor array.

According to an embodiment, said processor discriminates between large and small objects based on the polar angles in said data structure.

According to an embodiment, said processor identifies a component gesture of the moving object as consisting of one of the types: (i) a small-object tap gesture, (ii) a small-object glide gesture, (iii) a small-object touch-and-hold gesture, (iv) a large-object tap gesture, and (v) a large-object grab gesture.

According to another embodiment, which may be combined with other embodiments, said processor combines at least two component gestures of the same type, having assigned states ENDED, to further identify a compound gesture.

According to an embodiment, said processor combines at least two component gestures of the same type, having assigned states RECOGNIZED and UPDATED, respectively, to further identify a compound gesture.

According to an embodiment, the compound gesture is a double-tap gesture, combining two small-object tap gestures.

According to an embodiment, said processor activates a cruise control application in response to identifying the double-tap gesture.

According to an embodiment, the steering wheel further comprises visible light illumination means, connected to said processor, for selectively illuminating portions of said notch, wherein the activated cruise control application illuminates a portion of said notch at which the double-tap gesture was performed, and wherein in response to a small-object tap gesture at one end of the illuminated portion, the cruise control application increases a cruise control speed by a first amount, and in response to a small-object tap gesture at the other end of the illuminated portion, the cruise control application decreases the cruise control speed by the first amount.

According to an embodiment, in response to a small-object touch-and-hold gesture at one end of the illuminated portion, the cruise control application increases the cruise control speed by a second amount, different than the first amount, and in response to a small-object touch-and-hold gesture at the other end of the illuminated portion, the cruise control application decreases the cruise control speed by the second amount.

According to another embodiment, the compound gesture is a swipe gesture, combining two small-object glide gestures having different middle polar angles.

According to an embodiment, said processor is in communication with a telephone, and in response to a first swipe gesture said processor issues a command to the telephone to answer an incoming call.

According to an embodiment, in response to a second swipe gesture said processor issues a command to the telephone to hang up the answered call.

According to an embodiment, when the answered call continues for a time interval, said processor only issues the hang up command when the second swipe gesture is preceded by a large-object tap gesture.

According to an embodiment, the steering wheel further comprises visible light illumination means, connected to said processor, for selectively illuminating portions of said notch, wherein the processor illuminates at least a portion of said notch to indicate the incoming call.

According to an embodiment, the compound gesture is a slide gesture, combining two consecutive large-object grab gestures having different middle polar angles.

According to an embodiment, the steering wheel further comprises visible light illumination means, connected to said processor, for selectively illuminating portions of said notch, wherein in response to a detected slide gesture the illuminated portions track the middle polar angles of the slide gesture.

According to an embodiment, the compound gesture is an extended touch gesture, combining two consecutive small-object touch-and-hold gestures.

According to an embodiment, said processor further determines a radial coordinate of the object, responsive to light beams projected by said proximity sensor array and reflected back by the object being detected by said proximity sensor array.

According to an embodiment, said processor combines at least two component gestures of the same type, having similar middle polar angles and different radial coordinates, respectively, to further identify a radial swipe gesture.

According to an embodiment, in response to the radial swipe gesture, the processor opens a menu of options for an active application on a display connected to the steering wheel.

In the foregoing specification, the invention has been described with reference to specific exemplary embodiments thereof. It will, however, be evident that various modifications and changes may be made to the specific exemplary embodiments. In particular, sensors other than optical sensors may be used to implement the user interface, inter alia capacitive sensors disposed along the circumference of the steering wheel, and cameras that captured images of the steering wheel. Accordingly, the specification and drawings are to be regarded in an illustrative sense.

## Claims

1. A steering wheel (410) that identifies gestures performed on its surface, comprising:
a circular gripping element;
an array of light-based proximity sensors (100 -102, 105-109, 200-203, 205, 206), mounted in said gripping element; **characterized in that**
the circular gripping element comprises a thumb-receiving notch disposed along its circumference and the array of light-based proximity sensors (100 -102, 105-109, 200-203, 205, 206) projects light beams through said notch radially outward from said gripping element, and detects light beams reflected back into said gripping element by a moving object at or near said notch, wherein the steering wheel further comprises
a processor, coupled with said proximity sensor array (100 -102, 105-109, 200-203, 205, 206), for determining polar angles along the circumference of said gripping element occupied by the object, responsive to light beams projected by said proximity sensor array and reflected back by the object being detected by said proximity sensor array.

2. The steering wheel of claim 1 wherein said processor generates one or more data structures for the moving object, each data structure comprising:
a) a time stamp,
b) a polar angle at which the moving object starts,
c) a polar angle at which the moving object ends,
d) a middle polar angle of the moving object, and
e) an assigned state being one of the group RECOGNIZED, UPDATED and ENDED,
wherein said processor assigns the RECOGNIZED state to the data structure when the moving object is initially detected by said proximity sensor array,
wherein said processor assigns the UPDATED state to the data structure when the moving object is further detected by said proximity sensor array after the initial detection, and
wherein said processor assigns the ENDED state to the data structure when the moving object ceases to be detected by said proximity sensor array.

3. The steering wheel of claim **2** wherein said processor discriminates between large and small objects based on the polar angles in said data structure.

4. The steering wheel of claim **3** wherein said processor identifies a component gesture of the moving object as consisting of one of the types: (i) a small-object tap gesture, (ii) a small-object glide gesture, (iii) a small-object touch-and-hold gesture, (iv) a large-object tap gesture, and (v) a large-object grab gesture.

5. The steering wheel of claim **4** wherein said processor combines at least two component gestures of the same type, having assigned states ENDED, to further identify a compound gesture.

6. The steering wheel of claim **4** or **5** wherein said processor combines at least two component gestures of the same type, having assigned states RECOGNIZED and UPDATED, respectively, to further identify a compound gesture.

7. The steering wheel of claim **6,** wherein said processor activates a cruise control application in response to identifying a compound gesture, and further comprising visible light illumination means, connected to said processor, for selectively illuminating portions of said notch, wherein the activated cruise control application illuminates a portion of said notch at which the identified compound gesture was performed, and wherein in response to a small-object tap gesture at one end of the illuminated portion, the cruise control application increases a cruise control speed by a first amount, and in response to a small-object tap gesture at the other end of the illuminated portion, the cruise control application decreases the cruise control speed by the first amount.

8. The steering wheel of claim **7** wherein in response to a small-object touch-and-hold gesture at one end of the illuminated portion, the cruise control application increases the cruise control speed by a second amount, different than the first amount, and in response to a small-object touch-and-hold gesture at the other end of the illuminated portion, the cruise control application decreases the cruise control speed by the second amount.

9. The steering wheel of any one of the claims **6 to 8** wherein the compound gesture is a swipe gesture, combining two small-object glide gestures having different middle polar angles.

10. The steering wheel of claim **9** wherein said processor is in communication with a telephone, and in response to a first swipe gesture said processor issues a command to the telephone to answer an incoming call.

11. The steering wheel of claim **10** wherein in response to a second swipe gesture said processor issues a command to the telephone to hang up the answered call.

12. The steering wheel of any one of the claims **6** to **11,** wherein the compound gesture is a slide gesture, combining two consecutive large-object grab gestures having different middle polar angles, and further comprising visible light illumination means, connected to said processor, for selectively illuminating portions of said notch, wherein in response to a detected slide gesture the illuminated portions track the middle polar angles of the slide gesture.

13. The steering wheel of any one of the claims **6** to 12 wherein the compound gesture is an extended touch gesture, combining two consecutive small-object touch-and-hold gestures.

14. The steering wheel of any one of the preceding claims, wherein said processor further determines a radial coordinate of the object, responsive to light beams projected by said proximity sensor array and reflected back by the object being detected by said proximity sensor array.

15. The steering wheel of claim **14** wherein said processor combines at least two component gestures of the same type, having similar middle polar angles and different radial coordinates, respectively, to further identify a radial swipe gesture.

## Patentansprüche

1. Lenkrad (410), das die Bewegungen identifiziert, die auf seiner Oberfläche durchgeführt werden, umfassend:
ein kreisförmiges Greifelement;
eine Anordnung von lichtbasierten Näherungssensoren (100 - 102, 105 -109, 200 - 203, 205, 206), die auf dem Greifelement montiert ist, **dadurch gekennzeichnet, dass**
das kreisförmige Greifelement eine Daumenaufnahmekerbe umfasst, die entlang seinem Umfang angeordnet ist, und die Anordnung von lichtbasierten Näherungssensoren (100 - 102, 105 -109, 200 - 203, 205, 206) Lichtstrahlen durch die Kerbe radial nach außen von dem Greifelement projiziert und Lichtstrahlen erkennt, die in das Greifelement durch einen beweglichen Gegenstand an oder in der Nähe der Kerbe zurück reflektiert wird, wobei das Lenkrad weiter Folgendes umfasst:
einen Prozessor, der mit der Näherungssensoranordnung (100 -102, 105 - 109, 200 - 203, 205, 206) gekoppelt ist, um Polarwinkel entlang des Umfangs des Greifelements, der vom Gegenstand besetzt ist, in Reaktion auf Lichtstrahlen, die von der Näherungssensoranordnung projiziert und vom Gegenstand, der von der Näherungssensoranordnung erkannt wird, zurück reflektiert werden, zu bestimmen.

2. Lenkrad nach Anspruch 1, wobei der Prozessor eine oder mehrere Datenstrukturen für den beweglichen Gegenstand erzeugt, wobei jede Datenstruktur Folgendes umfasst:
a) einen Zeitstempel,
b) einen Polarwinkel, bei dem der bewegliche Gegenstand beginnt,
c) ein Polarwinkel, bei dem der bewegliche Gegenstand endet,
d) einen mittleren Polarwinkel des beweglichen Gegenstands, und
e) einen zugewiesener Zustand, der einer aus der Gruppe ist, umfassend ERKANNT, AKTUALISIERT und BEENDET,
wobei der Prozessor den Zustand ERKANNT der Datenstruktur zuweist, wenn der bewegliche Gegenstand anfänglich durch die Näherungssensoranordnung erkannt wird,
wobei der Prozessor den Zustand AKTUALISIERT der Datenstruktur zuweist, wenn der bewegliche Gegenstand weiter durch die Näherungssensoranordnung nach der anfänglichen Erkennung erkannt wird, und
wobei der Prozessor den Zustand BEENDET der Datenstruktur zuweist, wenn der bewegliche Gegenstand nicht mehr durch die Näherungssensoranordnung erkannt wird.

3. Lenkrad nach Anspruch 2, wobei der Prozessor zwischen großen und kleinen Gegenständen basierend auf den Polarwinkeln in der Datenstruktur unterscheidet.

4. Lenkrad nach Anspruch 3, wobei der Prozessor eine zusammengesetzte Bewegung des beweglichen Gegenstands als aus einem der folgenden Typen bestehend identifiziert: (i) Klopfbewegung - kleiner Gegenstand, (ii) Gleitbewegung - kleiner Gegenstand, (iii) Berühr- und Haltebewegung - kleiner Gegenstand, (iv) Klopfbewegung - großer Gegenstand, und (v) Greifbewegung - großer Gegenstand.

5. Lenkrad nach Anspruch 4, wobei der Prozessor mindestens zwei zusammengesetzten Bewegungen vom gleichen Typ kombiniert, denen die Zustände BEENDET zugewiesen sind, um weiter eine zusammengesetzte Bewegung zu identifizieren.

6. Lenkrad nach Anspruch 4 oder 5, wobei der Prozessor mindestens zwei zusammengesetzte Bewegungen vom gleichen Typ kombiniert, denen die Zustände ERKANNT bzw. AKTUALISIERT zugewiesen sind, um weiter eine zusammengesetzte Bewegung zu identifizieren.

7. Lenkrad nach Anspruch 6, wobei der Prozessor eine Geschwindigkeitsregelungs-Anwendung in Reaktion auf die Identifizierung einer zusammengesetzten Bewegung aktiviert, und weiter umfassend ein Mittel zur Beleuchtung mit sichtbarem Licht, das mit dem Prozessor verbunden ist, um selektiv Abschnitte der Kerbe zu beleuchten, wobei die aktivierte Geschwindigkeitsbegrenzungs-Anwendung einen Abschnitt der Kerbe beleuchtet, an dem die identifizierte zusammengesetzte Bewegung durchgeführt wurde, und wobei in Reaktion auf eine Klopfbewegung - kleiner Gegenstand an einem Ende des beleuchteten Abschnitts die Bewegungsbegrenzungs-Anwendung eine Bewegungsbegrenzungs-Geschwindigkeit um eine erste Betrag erhöht, und in Reaktion auf eine Klopfbewegung - kleiner Gegenstand am anderen Ende des beleuchteten Abschnitts die Bewegungsbegrenzungs-Anwendung die Bewegungsbegrenzungs-Geschwindigkeit um die erste Betrag verringert.

8. Lenkrad nach Anspruch 7, wobei in Reaktion auf eine Berührungs- und Haltebewegung - kleiner Gegenstand an einem Ende des beleuchteten Abschnitts die Bewegungsbegrenzungs-Anwendung die Bewegungsbegrenzungs-Geschwindigkeit um eine Betrag Zunahme erhöht, die verschieden von der ersten Betrag ist, und in Reaktion auf eine Berührungs- und Haltebewegung - kleiner Gegenstand am anderen Ende des beleuchteten Abschnitts die Bewegungsbegrenzungs-Anwendung die Bewegungsbegrenzungs-Geschwindigkeit um die zweite Betrag verringert.

9. Lenkrad nach einem der Ansprüche 6 bis 8, wobei die zusammengesetzte Bewegung eine Wischbewegung ist, die zwei Gleitbewegungen - kleiner Gegenstand mit verschiedenen mittleren Polarwinkeln kombiniert.

10. Lenkrad nach Anspruch 9, wobei der Prozessor mit einem Telefon in Kommunikation ist und in Reaktion auf eine erste Wischbewegung der Prozessor einen Befehl an das Telefon ausgibt, um einen eingehenden Anruf zu beantworten.

11. Lenkrad nach Anspruch 10, wobei in Reaktion auf eine zweite Wischbewegung der Prozessor einen Befehl an das Telefon ausgibt, um den beantworteten Anruf aufzulegen.

12. Lenkrad nach einem der Ansprüche 6 bis 11, wobei die zusammengesetzte Bewegung eine Gleitbewegung ist, die zwei aufeinander folgende Greifbewegungen - großer Gegenstand mit verschiedenen mittleren Polarwinkeln kombiniert und weiter umfassend ein Mittel zur Beleuchtung mit sichtbarem Licht, das mit dem Prozessor verbunden ist, um selektiv Abschnitte der Kerbe zu beleuchten, wobei in Reaktion auf eine erkannte Gleitbewegung die beleuchteten Abschnitte die mittleren Polarwinkel der Gleitbewegung nachverfolgen.

13. Lenkrad nach einem der Ansprüche 6 bis 12, wobei die zusammengesetzte Bewegung eine erweiterte Berührungsbewegung ist, die zwei aufeinander folgende Berührungs- und Haltebewegungen - kleiner Gegenstand kombiniert.

14. Lenkrad nach einem der vorhergehenden Ansprüche, wobei der Prozessor weiter eine radiale Koordinate des Gegenstands in Reaktion auf Lichtstrahlen bestimmt, projiziert von der Näherungssensoranordnung und zurück reflektiert durch den Gegenstand, der von der Näherungssensoranordnung erkannt wird.

15. Lenkrad nach Anspruch 14, wobei der Prozessor mindestens zwei zusammengesetzte Bewegungen vom gleichen Typ kombiniert, die ähnliche mittlere Polarwinkel bzw. verschiedene radiale Koordinaten aufweisen, um weiter eine radiale Wischbewegung zu identifizieren.

## Revendications

1. Volant de direction (410) qui identifie des gestes effectués sur sa surface, comprenant :
un élément de prise circulaire ;
un ensemble de détecteurs de proximité à base de lumière (100-102, 105-109, 200-203, 205, 206), montés sur ledit élément de prise ; **caractérisé en ce que**
l'élément de prise circulaire comprend une encoche de réception de pouce disposée le long de sa circonférence, et l'ensemble de détecteurs de proximité à base de lumière (100-102, 105-109, 200-203, 205, 206) projette des faisceaux de lumière à travers ladite encoche, radialement vers l'extérieur depuis ledit élément de prise, et détecte les faisceaux de lumière réfléchis vers ledit élément de prise par un objet mobile au niveau ou près de ladite encoche, le volant de direction comprenant en outre
un processeur, relié audit ensemble de détecteurs de proximité (100-102, 105-109, 200-203, 205, 206), afin de déterminer des angles polaires le long de la circonférence dudit élément de prise occupée par l'objet, en réponse aux faisceaux de lumière projetés par ledit ensemble de détecteurs de proximité et réfléchis par l'objet détecté par ledit ensemble de détecteurs de proximité.

2. Volant de direction selon la revendication 1, dans lequel ledit processeur génère une ou plusieurs structure(s) de données pour l'objet mobile, chaque structure de données comprenant :
a) un horodatage ;
b) un angle polaire auquel l'objet mobile démarre,
c) un angle polaire auquel l'objet mobile se termine,
d) un angle polaire intermédiaire de l'objet mobile, et
e) un état affecté qui est l'un du groupe RECONNU, MIS A JOUR et TERMINÉ,
dans lequel ledit processeur affecte l'état RECONNU à la structure de données lorsque l'objet mobile est initialement détecté par ledit ensemble de détecteurs de proximité,
dans lequel ledit processeur affecte l'état MIS A JOUR à la structure de données lorsque l'objet mobile est également détecté par ledit ensemble de détecteurs de proximité après la détection initiale,
et
dans lequel ledit processeur affecte l'état TERMINÉ à la structure de données lorsque l'objet mobile cesse d'être détecté par ledit ensemble de détecteurs de proximité.

3. Volant de direction selon la revendication 2, dans lequel ledit processeur fait la distinction entre les objets de grande et de petite taille sur la base des angles polaires dans ladite structure de données.

4. Volant de direction selon la revendication 3, dans lequel ledit processeur identifie un geste de l'objet mobile comme consistant en l'un des types suivants : (i) un tapotage avec un petit objet, (ii) un glissement avec un objet de petite taille, (iii) un maintien enfoncé avec un objet de petite taille, (iv) un tapotage avec un objet de grande taille, et (v) une saisie avec un objet de grande taille.

5. Volant de direction selon la revendication 4, dans lequel ledit processeur combine au moins deux gestes du même type, auxquels a été affecté l'état TERMINÉ, afin d'identifier un autre geste.

6. Volant de direction selon la revendication 4 ou 5, dans lequel ledit processeur combine au moins deux gestes du même type, auxquels ont été affectés les états RECONNU et MIS A JOUR, respectivement, afin d'identifier un autre geste.

7. Volant de direction selon la revendication 6, dans lequel ledit processeur active une application de régulation de vitesse en réponse à l'identification d'un geste, et comprenant en outre un moyen d'éclairage avec une lumière visible, relié audit processeur, destiné à éclairer sélectivement des parties de ladite encoche, dans lequel l'application de régulation de vitesse activée éclaire une partie de ladite encoche au niveau de laquelle le geste identifié a été effectué, et dans lequel, en réponse à un geste de tapotage avec un objet de petite taille à une extrémité de la partie éclairée, l'application de régulation de vitesse augmente une vitesse programmée selon un premier montant, et, en réponse à un geste de tapotage avec un objet de petite taille à l'autre extrémité de la partie éclairée, l'application de régulation de vitesse diminue la vitesse programmée selon le premier montant.

8. Volant de direction selon la revendication 7, dans lequel, en réponse au maintien enfoncé d'un objet de petite taille à une extrémité de la partie éclairée, l'application de régulation de vitesse augmente la vitesse programmée selon un second montant, différent du premier montant, et, en réponse au maintien enfoncé d'un objet de petite taille à l'autre extrémité de la partie éclairée, l'application de régulation de vitesse diminue la vitesse programmée selon le second montant.

9. Volant de direction selon l'une quelconque des revendications 6 à 8, dans lequel le geste est un geste de passage, qui combine deux gestes de glissement avec un objet de petite taille qui possèdent des angles polaires intermédiaires différents.

10. Volant de direction selon la revendication 9, dans lequel le processeur est en communication avec un téléphone, et, en réponse à un premier geste de passage, ledit processeur délivre une commande au téléphone afin de répondre à un appel entrant.

11. Volant de direction selon la revendication 10, dans lequel, en réponse à un second geste de passage, ledit processeur délivre une commande au téléphone afin de raccrocher.

12. Volant de direction selon l'une quelconque des revendications 6 à 11, dans lequel le geste est un geste de coulissement, qui combine deux gestes consécutifs de saisie d'un objet de grande taille qui possèdent des angles polaires intermédiaires différents, et comprenant en outre un moyen d'éclairage avec une lumière visible, relié audit processeur, afin d'éclairer sélectivement des parties de ladite encoche, dans lequel, en réponse à un geste de glissement détecté, les parties éclairées suivent les angles polaires intermédiaires du geste de glissement.

13. Volant de direction selon l'une quelconque des revendications 6 à 12, dans lequel le geste est un geste de toucher étendu, qui combine deux gestes consécutifs de maintien enfoncé d'un objet de petite taille.

14. Volant de direction selon l'une quelconque des revendications précédentes, dans lequel ledit processeur détermine en outre une coordonnée radiale de l'objet, en réponse aux faisceaux de lumière projetés par ledit ensemble de détecteurs de proximité et réfléchis par l'objet détecté par ledit ensemble de détecteurs de proximité.

15. Volant de direction selon la revendication 14, dans lequel ledit processeur combine au moins deux gestes du même type, qui présentent des angles polaires intermédiaires similaires et des coordonnées radiales différentes, respectivement, afin d'identifier un geste de passage radial.
